# FASCICULE DE BREVET EUROPEEN

(11) **EP 0 765 184 B1**
(45) Date de publication et mention de la délivrance du brevet: **11.03.1998**
(21) Numéro de dépôt: 95922564.0
(22) Date de dépôt: 06.06.1995
(51) Int. Cl.: B01D 17/05

(54) **NOUVEAU PROCEDE DE TRAITEMENT D'UNE EMULSION**
NEUES VERFAHREN ZUR BEHANDLUNG EINER EMULSION
NOVEL METHOD FOR TREATING AN EMULSION

(30) Priorité: 14.06.1994 FR 9407239
(43) Date de publication de la demande: 02.04.1997
(73) Titulaire: Roquette Frères, F-62136 Lestrem (FR)
(72) Inventeur: GOSSET, Serge, F-62136 Lestrem (FR); VIDEAU, Didier, F-59000 Lille (FR); SABRE, Philippe, F-59270 Saint-Jans-Cappel (FR)
(74) Mandataire: Boulinguiez, Didier
(86) Numéro de dépôt international: FR9500728
(87) Numéro de publication internationale: WO9534363

(56) Documents cités:
- PATENT ABSTRACTS OF JAPAN vol. 016 no. 470 (C-0990) ,30 Septembre 1992 & JP,A,04 168198 (HONEN CORP) 16 Juin 1992,
- DATABASE WPI Section Ch, Week 8212 Derwent Publications Ltd., London, GB; Class A95, AN 82-23236e & JP,A,57 028 198 (KYOSHIN KK) , 15 Février 1982

## Description

La présente invention est relative à un nouveau procédé de traitement d'une émulsion, applicable industriellement. Plus précisément, la présente invention a pour objet un procédé de traitement d'une émulsion caractérisé par le fait qu'il comprend une étape de cassage de ladite émulsion par au moins une cyclodextrine. Elle vise en particulier le traitement, en vue de son cassage, d'une émulsion constituée pour au moins 50 % environ de son poids en au moins un corps gras et de l'eau, traitement au moyen d'une cyclodextrine, en particulier d'alpha-cyclodextrine, de béta-cyclodextrine et/ou de l'un quelconque de leurs dérivés.

Dans le cadre de la présente invention, le terme "émulsion" doit être entendu dans son acception la plus large et comme couvrant tout milieu hétérogène, quelles que soient sa nature, sa composition, son origine et sa destination, constitué par la dispersion, à l'état de particules plus ou moins fines, d'une matière, se trouvant ou amenée en particulier dans un état liquide, dans une seconde matière, se trouvant ou amenée également le plus souvent dans un état liquide, ladite seconde matière, non miscible à la première, formant une phase continue. Cette définition s'applique notamment, sans que cette liste ne soit la moins limitative, aux émulsions stables ou stabilisées dites "eau dans l'huile" ("E/H"), "huile dans l'eau" ("H/E") ainsi qu'aux micro-émulsions, stables ou stabilisées, "eau dans l'huile" (E/H) et "huile dans l'eau" (H/E).

Lesdites émulsions peuvent, par exemple, présenter un aspect laiteux très blanc ou laiteux bleuté tandis que lesdites micro-émulsions ont, pour leur part, un aspect généralement transparent bleuté ou opalescent.

En outre, le terme "émulsion" doit s'entendre comme regroupant également, en particulier, les solutions micellaires, d'aspect classiquement transparent ainsi que les émulsions dites "multiples" telles que des émulsions "eau/huile/eau" (E/H/E) qui sont des émulsions H/E dans lesquelles les particules (gouttes) d'huile contiennent elles-mêmes des particules (gouttes) d'eau plus petites, ou telles que des émulsions "huile / eau / huile" (H/E/H).

De préférence, dans le cadre du procédé selon l'invention, l'émulsion devant être traitée par au moins une cyclodextrine en vue de son cassage, contient, outre les deux matières non miscibles et dispersées l'une dans l'autre comme évoqué ci-avant, au moins un agent de stabilisation, en particulier au moins un agent d'encombrement stérique, notamment un agent gélifiant ou épaississant, ou au moins un agent de surface, notamment un agent émulsifiant, également appelé agent émulsionnant ou émulgateur.

Ledit agent de stabilisation, notamment de type agent émulsifiant, peut tout à fait être un composant du corps gras et/ou de la phase aqueuse de l'émulsion à traiter.

Dans le cadre de la présente invention, l'expression "cassage d'émulsion" consiste, de manière générale, en une modification de l'aspect visuel (macroscopique) et/ou microscopique de ladite émulsion en regard de son état initial, et notamment en une diminution de l'homogénéité du milieu. Ce cassage peut notamment résulter de la mise en oeuvre d'un moyen, de quelque nature qu'il soit, permettant de casser/rompre ou même, simplement, de déstabiliser les dispersions que constituent la plupart des émulsions.

Ce résultat doit être ici considéré comme pouvant être obtenu selon une multitude de processus. Entre autres, l'instabilité d'une émulsion pourra résulter :
- en la floculation provenant de l'association des particules (gouttelettes notamment) de phase dispersée en particules (gouttelettes notamment) de plus grande taille ou en floculats, étant entendu que ce processus ne conduit pas obligatoirement à la coalescence (cf infra) mais est fréquemment le signe précurseur d'un cassage total (ou rupture totale) de l'émulsion, cassage lié à la proximité desdites gouttelettes, lesquelles ne sont alors stabilisées que par un mince film de phase dispersante et d'un agent de surface à fonction stabilisante, et/ou
- en la coalescence, lequel processus est, contrairement à la floculation, un procédé toujours irréversible résultant de la rupture du film de phase dispersante continue, situé entre les particules de la phase dispersée qui entrent en collision, et/ou
- en le mûrissement ou la diffusion moléculaire qui résulte de la solubilité de très petites gouttelettes (moins de 1 µm) dans les gouttelettes plus grandes de même nature, ce qui provoque leur grossissement.

Il convient de préciser que la coalescence n'est généralement observée que pour des dispersions liquides. D'autre part, les émulsions multiples, lesquelles possèdent une phase dispersée supplémentaire comme indiqué ci-avant, peuvent présenter tous les types précités d'instabilité mais également d'autres processus tels que, par exemple, une contraction osmotique et un grossissement de la phase aqueuse interne.

Il convient d'insister à cet endroit de la description que le cassage d'une émulsion peut, comme il sera décrit au niveau des exemples ci-après, se traduire par la précipitation de complexes entre une cyclodextrine et un corps gras, ledit corps gras, notamment de type "huile", étant initialement dispersé dans la phase aqueuse dispersante.

Un tel processus de précipitation de complexes (cyclodextrine/corps gras) insolubles dans l'eau, peut d'ailleurs, si l'émulsion en cause est traitée d'emblée par une forte quantité de cyclodextrine(s), être obtenu sans qu'aucun phénomène de coalescence macroscopiquement visible n'ait pu être décelé de façon préliminaire.

De nombreuses industries sont, en particulier à des fins techniques, économiques et/ou de préservation de l'environnement, confrontées à la nécessité de mettre en oeuvre, à un moment donné de leur activité, une opération de cassage d'émulsion et notamment une opération de traitement d'un co-produit, d'un produit intermédiaire, d'un effluent, d'un rejet et/ou d'une eau résiduaire de caractère aqueux et contenant un ou plusieurs corps gras, opération devant permettre d'éliminer, de recycler et/ou de récupérer pour le(s) valoriser, tout ou partie du ou des corps gras contenu(s) dans l'émulsion avant traitement.

Il est notamment impératif, pour répondre à une pression législative imposant des teneurs minimales en DBO et DCO (respectivement demandes biochimique et chimique en oxygène) de plus en plus faibles dans les eaux de rejets, de diminuer voire d'éliminer les corps gras contenus dans lesdites eaux et ce, en particulier, dans celles issues a) de nombreuses industries agro-alimentaires comme, par exemple, les unités de traitement de graines oléagineuses et de corps gras, les charcuteries et salaisonneries industrielles, les abattoirs ou les stations d'équarrissage, b) les industries métallurgiques comme les fabricants industriels d'outils de coupe, lesquels produisent des boues de meulage, c) les industries mécaniques et du travail des métaux, lesquelles engendrent des rejets riches en huiles provenant des machine-outils, en particulier des résidus de filtration de fluides de coupe ou provenant des cabines de peinture, ou encore d) les industries du textile, notamment celles assurant le lavage et le dessuintage de la laine. Ces dernières sont confrontées quotidiennement au problème du cassage des émulsions et ce, dans le triple objectif a) d'appauvrir la teneur de la laine en corps gras en vue d'améliorer la qualité, la présentation et les conditions de travail subséquentes de celle-ci, b) d'appauvrir la teneur de leurs rejets aqueux en corps gras en vue de diminuer leur coût de traitement en station d'épuration et c) de récupérer la suintine, ensemble des corps gras que contient la laine de mouton, suintine qui est ensuite raffinée, en particulier sous forme de lanoline, graisse largement utilisée dans les industries cosmétologiques.

D'une manière générale, l'opération de cassage d'émulsion intéresse toute activité industrielle visant à préparer et/ou traiter tous types d'émulsions et notamment, outre les industries énumérées ci-avant, les industries pharmaceutiques, les industries des engrais, fertilisants et agents pour la protection des végétaux, les industries des plastiques, les industries du bâtiment, les industries des peintures, vernis et cires, les industries du papier et de l'emballage, les tanneries et les industries du cuir, l'exploitation minière, les industries nucléaires, les industries des bains d'électrolyse et du polissage, les industries pétrolières et pétrochimiques, les industries des additifs pour huiles minérales, les industries des adhésifs, les industries chimiques, les industries photographiques, les blanchisseries industrielles et les industries des détergents et agents de lavage.

Il est bien connu de l'homme de l'art que le cassage ou rupture d'émulsion ainsi que la séparation subséquente des phases aqueuse et grasse font appel à des techniques qui, pour être efficaces industriellement, impliquent généralement la mise en oeuvre de moyens lourds, onéreux et/ou demandant un contrôle régulier et rigoureux, en tous cas de moyens rarement applicables à de nombreux types d'émulsions, en particulier à des corps gras et/ou des agents émulsifiants de natures physico-chimiques et de propriétés variées.

Les techniques aujourd'hui à la portée de l'homme de l'art en vue d'assurer le cassage industriel d'émulsions, peuvent être regroupées en deux grandes catégories à savoir, les procédés physico-chimiques d'une part et les procédés purement physiques d'autre part.

Les premiers nommés reposent, pour leur grande majorité, sur le principe du cassage d'émulsion à l'aide de composés chimiques qui, introduits dans l'émulsion à traiter, vont notamment modifier le champ de forces électriques créé par les agents émulsifiants et conduire à la séparation des deux phases, l'une aqueuse, la seconde de nature grasse, en particulier huileuse.

Ces procédés chimiques nécessitent généralement l'emploi de réactifs de "désémulgation" ou "désémulsification" pour le cassage de l'émulsion. Le recours à des électrolytes ou réactifs minéraux ayant une telle fonction est connu depuis longtemps.

De tels réactifs peuvent être constitués de sels minéraux comme, à titre d'exemples, Al2 SO3, Al Cl3, Fe Cl3, Fe2 (SO4)3, Na Al2 O4 ou Na Al O2, sels dont la mise en oeuvre, si elle se révèle économique, n'en présente pas moins le double inconvénient d'induire des teneurs résiduelles en sels et des teneurs résiduelles en huiles, particulièrement élevées.

Lesdits électrolytes peuvent également se présenter sous forme d'acides minéraux tels que, par exemple, H2 SO4, HCl ou HNO3. Certes, leur utilisation est également peu onéreuse mais s'accompagne, outre des problèmes liés à une manutention délicate, des désavantages précités de taux résiduels en sels et huiles particulièrement importants.

D'autres techniques physico-chimiques classiques telles que la floculation, l'absorption ou l'électro-flottation, permettent d'obtenir des teneurs en sels et en huiles significativement plus faibles mais nécessitent des investissements élevés, y compris en regard de la seule mise en oeuvre des composés d'ammonium quaternaire et/ou des polyélectrolytes dont l'utilisation en floculation est préconisée.

Les procédés physiques classiques de cassage d'émulsion concernent principalement la centrifugation, l'ultracentrifugation, l'ultrafiltration, l'ultrasonication et l'évaporation, en particulier l'évaporation sous vide, généralement associée à une étape d'incinération (évapo-incinération).

L'ultrafiltration est un moyen permettant de séparer les constituants d'un mélange en fonction de la taille des particules constitutives, par l'intermédiaire d'une membrane et sous l'influence de la pression. Cependant, dans la pratique industrielle, cette technique pose de réels problèmes de colmatage et/ou de détérioration des membranes.

D'un autre côté, le procédé d'évapo-incinération, s'il présente généralement l'avantage de permettre un cassage amélioré des émulsions et donc une meilleure dépollution des effluents, rejets ou eaux résiduaires industriel(le)s, n'en demeure pas moins, comme l'ultrasonication, une technologie onéreuse.

En suite de quoi, il existait un besoin réel de trouver un moyen de traitement d'émulsion à la fois simple, efficace, économique, ne présentant pas de danger pour l'utilisateur et/ou l'environnement, et applicable au cassage d'une très grande variété d'émulsions, en particulier en ce qui concerne la nature et la concentration des corps gras et/ou agents émulsifiants contenus dans lesdites émulsions.

Et la Société Demanderesse a trouvé, après de longues et difficiles études, qu'un tel moyen pouvait, de façon surprenante et inattendue, être simplement constitué par la mise en oeuvre, au sein de l'émulsion, d'au moins une cyclodextrine.

Plus précisément, la présente invention a pour objet un nouveau procédé de traitement d'émulsion caractérisé par le fait qu'il comprend une étape de cassage de l'émulsion par au moins une cyclodextrine.

Il est largement connu que les cyclodextrines peuvent, entre autres, assurer les fonctions suivantes :
1) d'agent solubilisant de principes actifs tels que, par exemple, des molécules à vocation alimentaire, pharmaceutique, colorante, phytosanitaire ou des agents de surface, y compris des agents émulsifiants et des corps gras, lesdits principes actifs et agents de surface pouvant notamment être de nature apolaire,
2) d'agent d'extraction de principes actifs, y compris de nature apolaire, tels que, par exemple, le cholestérol, les acides gras ou les vitamines, et
3) d'agent de formation et/ou de stabilisation d'émulsions telles que, par exemple, des mayonnaises ou autres émulsions à usage alimentaire.

Si les trois fonctions précitées des cyclodextrines s'appliquent très largement au domaine alimentaire, il n'en demeure pas moins qu'elles intéressent tous types d'industries comme il va être illustré ci-après. En termes de solubilisation, on peut faire référence parmi les documents les plus récents, à l'article de SZENTE et coll., publié en pages 340 à 344 des "Minutes" du 6ème Symposium International sur les Cyclodextrines, décrivant la fonction solubilisante d'acides gras et produits "similaires" (dont le cholestérol et ses esters) assurée par des cyclodextrines telles que des dérivés alkylés ou hydroxyalkylés de la béta-cyclodextrine.

A titre d'exemple, on peut également citer le brevet US 5.137.571 qui enseigne que l'on peut améliorer l'introduction d'agents épaississants hydrophobes dans des systèmes aqueux, et donc leur solubilisation, par mise en oeuvre de cyclodextrines et dérivés, en particulier de type éthoxylate ou propoxylate.

Cette introduction permet de s'affranchir de la mise en oeuvre de co-solvants organiques, par exemple dans la préparation de peintures latex.

En termes d'extraction de principes actifs, on peut faire référence parmi les documents les plus récents au brevet américain US 5.232.725 qui décrit l'extraction, par des cyclodextrines, du cholestérol et des acides gras libres contenus dans des graisses d'origine animale.

La Société Demanderesse a publié les demandes de brevet européen EP 408.411 et EP 406.101 décrivant de nouveaux procédés de préparation de produits laitiers (lait, crème, fromages, beurre) à teneur réduite en stérols, lesdits procédés impliquant la mise en contact d'une émulsion huile dans eau comprenant des matières grasses laitières avec une cyclodextrine en quantité suffisante pour former des complexes avec les stérols dans le seul but que ces derniers puissent être extraits en tout ou partie.

Les complexes sont séparés du milieu gras et ce, soit en mettant en oeuvre et ce, de manière mécanique et tout à fait classique (barattage), une opération préalable d'inversion d'émulsion (obtention d'une émulsion stable E/H - cf brevet EP 406.101), soit en l'absence de toute étape d'inversion de l'émulsion H/E initiale (brevet EP 408.411). Ces deux procédés visent spécifiquement l'appauvrissement de produits laitiers en principes actifs, en l'occurrence en stérols, lesquels peuvent être valorisés par ailleurs, et en aucun cas le cassage des émulsions "alimentaires" ainsi traitées, cassage qui n'est jamais constaté ni obtenu de par la seule mise en oeuvre de cyclodextrine.

Le brevet US 3.491.132, plus ancien, décrit un procédé visant spécifiquement à réduire, de façon significative, le taux d'acides gras libres contenus dans des huiles brutes glycéridiques et donc à raffiner lesdites huiles et ce, par mise en oeuvre de cyclodextrines aptes à former des clathrates avec les acides gras libres. Selon les auteurs, il est largement préféré de mettre en oeuvre la cyclodextrine, notamment la BCD, dans une émulsion huile brute / eau qui soit instable. En suite de quoi, l'émulsion est instable avant même d'être traitée par la cyclodextrine, laquelle est donc mise en oeuvre non pour déstabiliser ou casser l'émulsion H/E obtenue, mais pour permettre une bonne extraction des acides gras. Au contraire, il est recherché l'obtention, au moins partielle, d'une émulsion vraie pour qu'il y ait contact intime et prolongé entre la cyclodextrine ajoutée et les acides gras libres de l'huile brute, l'eau permettant une bonne clathration desdits acides gras.

En termes de formation et/ou de stabilisation d'émulsions de toutes natures, compositions et destinations, la littérature, y compris la plus récente, a largement fait état de l'intérét de la mise en oeuvre de cyclodextrines à cette fin particulière.

Le brevet japonais JP 04-053451 rappelle qu'il est connu d'associer un corps gras tel qu'un lysophospholipide à une cyclodextrine, en particulier la BCD, en vue de préparer un agent apte à stabiliser une émulsion de type crème glacée.

Le brevet japonais JP 63-248433 décrit l'utilisation de cyclodextrines en vue d'émulsifier des mélanges eau / corps gras et d'en conserver le pouvoir moussant.

La demande de brevet allemand DE 3.828.031 préconise l'usage de BCD en tant qu'agent anti-mousse d'émulsions / dispersions polymériques contenant un agent émulsifiant de type laurylsulfonate de sodium. La BCD est présentée comme n'affectant pas la stabilité et le comportement au stockage de ces émulsions / dispersions.

Le brevet européen EP 508.389 d'autre part, préconise la stabilisation d'émulsions photographiques à base d'halogénures d'argent par utilisation d'une solution contenant une cyclodextrine, en particulier la BCD, et un composé de type aryl hydrazide.

A titre d'exemple, on peut également citer la demande de brevet internationale WO 93/00688 publiée au nom de la Société Demanderesse. De par ce document, il apparait que les cyclodextrines, en particulier la BCD, peuvent être utilisées comme des agents émulsifiants efficaces en vue d'obtenir des émulsions stables utiles à l'usinage des métaux, en particulier dans les opérations de coupe ou de déformation.

De telles émulsions peuvent être, dans certains cas, qualifiées d'instables dans la seule mesure où elles donnent lieu à une séparation de phases. Cependant, cette qualification ne peut en aucun cas être entendue comme correspondant à un cassage desdites émulsions. En effet, la phase supérieure obtenue est toujours constituée d'une émulsion mais celle-ci est plus concentrée que l'émulsion originelle. D'autre part, la phase inférieure, de nature principalement aqueuse, contient de l'eau et des cyclodextrines non complexées. Il n'y a, au cours de cette pseudo "déstabilisation" aucune formation de précipité ni aucun relarguage de corps gras (huile).

Il découle donc globalement de l'art antérieur qui vient d'être abondamment décrit, notamment sur le rôle solubilisant et stabilisant des cyclodextrines, que non seulement l'intérêt, même potentiel, d'utiliser une cyclodextrine pour casser une émulsion n'était absolument pas divulgué, et que par ailleurs il n'était absolument pas évident de penser à incorporer des cyclodextrines dans des émulsions stables avec pour objectif de déstabiliser, ou plus largement de casser, celles-ci.

Et c'est en adoptant une démarche se situant résolument à l'encontre des enseignements les plus récents de la technique, que la Société Demanderesse a découvert qu'une telle incorporation, y compris dans des systèmes très complexes, pouvait conduire à un résultat aussi surprenant.

Dans le cadre de l'invention, on entend par le terme "cyclodextrine" l'alpha, la béta ou la gamma cyclodextrine, ou leurs mélanges, ainsi que les dérivés de ces cyclodextrines. On peut rappeler que l'alpha, la béta et la gamma cyclodextrine sont des macrocycles contenant respectivement six, sept et huit motifs glucose. Le terme "dérivé" doit être compris comme comprenant tout macrocycle tel qu'il vient d'être défini, dans lequel l'un au moins des motifs glucose constitutifs est substitué, au moins en un endroit, par un groupement ou une molécule qui peuvent être de taille et de fonctionnalité très diverses, comme par exemple un groupement alcoylé ou hydroxyalcoylé, et notamment un groupement hydroxypropyle, un groupement ionique, et notamment cationique, ou une molécule de mono-, di- ou tri-saccharide telle qu'une molécule de glucose, fructose, maltose, saccharose ou maltotriose. Le terme "dérivé" englobe également les "polymères" de cyclodextrines obtenus par exemple par réaction des cyclodextrines avec des réactifs polyfonctionnels ou des cyclodextrines fixées, notamment greffées, sur des supports de toutes natures (silice, zéolithes, polymères synthétiques, cellulose, etc...).

De préférence, on met en oeuvre, dans le cadre de l'invention, au moins une cyclodextrine choisie dans le groupe constitué par l'alpha-cyclodextrine, la béta-cyclodextrine et leurs dérivés tels que leurs dérivés hydroxyalkylés ou ioniques, notamment cationiques. A titre indicatif, la mise en oeuvre de béta-cyclodextrine (ci-après désignée BCD) non modifiée chimiquement est un moyen de cassage à la fois efficace et peu coûteux dans le cadre du procédé objet de l'invention.

La cyclodextrine peut être mise en oeuvre au sein de l'émulsion à traiter, soit sous la forme d'une poudre, celle-ci présentant généralement une humidité se situant entre environ 1 et environ 20 %, de préférence entre 5 et 16 %, en poids, soit sous la forme d'une solution, en particulier d'une solution aqueuse, dont la concentration maximale en cyclodextrine dépendra, en particulier, de la nature de la cyclodextrine et de la température de la solution.

Selon une variante de l'invention, l'émulsion devant être cassée sera traitée par une cyclodextrine se présentant sous la forme d'une poudre présentant une humidité se situant entre 7 et 15 % en poids.

En tout état de cause, quel que soit le mode d'introduction de la cyclodextrine au sein de l'émulsion à traiter, cette introduction peut se faire en une seule fois ou, inversement, de manière progressive en un laps de temps donné et ce, soit en plusieurs apports discontinus, soit par un apport continu de cyclodextrine.

D'autre part, la température de l'émulsion au sein de laquelle on introduit la cyclodextrine n'est pas un paramètre limitatif dans le cadre de l'invention.

Cette température peut, à titre indicatif, varier entre environ 20°C et environ 65°C en fonction, entre autres, de l'origine, de la nature et de la destination de l'émulsion et, notamment, de la nature et de la destination de tout corps gras contenu dans ladite émulsion.

Dans le cadre du procédé objet de la présente invention, l'émulsion devant être traitée par au moins une cyclodextrine, est constituée pour au moins 50 % environ de son poids en au moins un corps gras et de l'eau. De préférence, ladite émulsion est constituée pour au moins 60 % environ de son poids en au moins un corps gras et de l'eau.

Dans le cadre de l'invention, on entend en particulier par l'expression "corps gras" et ce, sans que cette liste ne soit la moins limitative, toute huile ou graisse, liquide, solide ou pâteuse à température ambiante, qu'elle soit d'origine végétale, animale, minérale ou synthétique, qu'elle soit utilisée en l'état, fluidifiée ou modifiée chimiquement, ainsi que tout extrait, éventuellement modifié, issu de l'un quelconque de ces corps gras tel que, par exemple, la lanoline, le cholestérol, les phytostérols, les naphtalènes et hydronaphtalènes, l'acide undécylénique, ou encore tout mélange quelconque d'au moins deux quelconques des produits (corps gras, extraits de corps gras) susmentionnés.

En ce qui concerne la nature, la composition, les caractéristiques et les utilisations des corps gras de toutes origines, pouvant être présents dans les émulsions devant être traitées selon l'invention, l'on se reportera, entre autres, aux documents suivants, lesquels sont intégralement incorporés à la présente description :
- "Fats and Fatty Oils" par A. THOMAS dans "ULMANN's ENCYCLOPEDIA OF INDUSTRIAL CHEMISTRY", 1987, 5ème édition, Vol. A 10, pp 173-242,
- "ENCYCLOPEDIA OF CHEMICAL TECHNOLOGY" par KINK-OTHMER, 4ème édition, vol. 5 à 8, pp 5:736 ; 7:585, 586, 594, 603, 928, 936, 960 ; 8:895,
- "FATS AND OILS INDUSTRY OVERVIEW" par C. DEVEREUX et collaborateurs dans "CEH Marketing Research Report", Novembre 1990, pp 220.500 F à 220.5002 F,
- "Oil, Oil Refining" par W.W. IROIN et collaborateurs dans "ULMANN's ENCYCLOPEDIA OF INDUSTRIAL CHEMISTRY", 1987, 5ème édition, vol A 18, pp 52 à 98.

Selon une variante préférentielle du procédé objet de la présente invention, l'émulsion devant être traitée par au moins une cyclodextrine contient, en tant qu'agent de stabilisation, au moins un agent de surface, également dénommé "surfactant", "surfactif" ou "agent tensio-actif".

Les agents de surface sont connus comme étant des substances, naturelles ou synthétiques, de nature amphiphilique, c'est-à-dire formées de deux parties d'affinité opposées ; une partie hydrophile ou polaire et une partie hydrophobe, lipophile ou apolaire.

Du fait, d'une part, de leur propension à s'adsorber aux interfaces (liquide - gaz, liquide - liquide, ou liquide - solide) et d'autre part, de la possibilité qu'elles ont de se grouper pour générer des micelles, les molécules d'agent de surface peuvent présenter un certain nombre de caractéristiques et un certain nombre de pouvoirs plus ou moins prononcés, et en particulier : pouvoirs mouillant, émulsionnant, moussant, solubilisant, détergent, dispersant, suspensif, d'antiredéposition, complexant, chélatant et séquestrant.

Dans le cadre de la présente invention, l'agent de stabilisation avantageusement présent au sein de l'émulsion devant être cassée, sera choisi dans le groupe comprenant les agents de surface anioniques, cationiques, amphotères et non-ioniques ainsi que les mélanges quelconques d'au moins deux quelconques de ces agents.

Par "agents de surface anioniques" on entend, entre autres :
- les sels d'acides gras et notamment les sels alcalins ou métalliques d'acides gras tels que les savons de sodium, potassium ammonium, calcium ou magnésium.
- les agents de surface anioniques à groupement sulfate tels que les sulfates d'alkyle primaires ou secondaires,
- les agents de surface anioniques à groupement sulfonate tels que les alkylsulfonates, primaires ou secondaires, les alkylarylsulfonates et aralkylsulfonates,
- les agents de surface dérivés des acides aminés, et
- les agents de surface anioniques organo-phosphorés tels que les phosphates de mono- ou de di- alkyles, les alkyles phosphonates, les dérivés phosphorés renfermant une fonction amine ou les phosphates d'alkylpolyoxyéthylène glycol mono- ou di- substitués.

Par "agents de surface cationiques" on entend, en particulier :
- les sels d'alkylamines primaires, secondaires et tertiaires,
- les sels d'ammoniums quaternaires, notamment ceux qui sont mono- ou di- alkylés, monoalkylés et polyéthoxylés, ceux dont le reste alkyle est complexe ou ceux renfermant un ou plusieurs hétérocycles,
- les oxydes d'amines,
- les agents de surface cationiques dérivés du pétrole, en particulier les amines primaires, les diamines, les sels d'ammoniums quaternaires ou les amines (primaires, secondaires ou tertiaires) dont une chaine hydrocarbonée contient un noyau benzènique,
- les agents de surface cationiques polymérisés ou polysavons, et
- les agents de surface cationiques ne contenant pas d'atome d'azote tels que les dérivés du sulfoxonium, du sulfonium, du phosphonium ou de l'iodonium.

Par "agents de surface amphotères" on entend, en particulier :
- les lécithines,
- les dérivés de la bétaine,
- les dérivés de l'imidazoline, et
- les agents de surface ampholytes dérivant des amino-acides et notamment dérivés de la glycine ou de la β-alanine, ou encore de type N-alkylamino-butyrates.

Par "agents de surface non-ioniques" on entend en particulier :
- les agents de surface à liaison ester, en particulier les esters de glycol et d'acides gras tels que ceux résultant de l'estérification des acides laurique, palmitique, stéarique, oléique, ricinoléique, par l'éthylène glycol, le propylène glycol ou le diéthylène glycol ; les esters de glycérol et d'acides gras tels que le monostéarate de glycérol, les esters de polyglycérols et d'acides gras, les esters de tétroses, pentoses, hexoses et d'acides gras, les esters de tétritol, pentitol ou hexitol et d'acides gras ; les esters de di- oligo ou polysaccharides et d'acides gras, les esters de saccharose et d'acides gras ("sucresters" ou "sucroesters") tels que ceux obtenus par transestérification entre le saccharose et l'ester méthylique d'un acide gras ou d'un mélange d'acides gras, notamment les esters lauriques ; les esters de saccharose et de triglycérides ("sucroglycérides") ; les esters de sorbitanne et d'acides gras ; les esters de sorbitanne polyoxyéthylénés ("polysorbates") ou esters de polyoxyalkylène - polyols, et
- les agents de surface à liaison éther, en particulier les alkylphénols et alcools polyoxyéthylénés,
- les agents de surface à liaison amide ou alkylamides polyoxyéthylénés et notamment les mono- et diéthanolamides et leurs dérivés,
- les agents de surface à liaison amine ou alkylamines polyoxyéthylénées,
- les mercaptans polyoxyéthylénés, et
- les copolymères d'oxydes d'alkylènes.

A titre indicatif, l'émulsion devant être traitée conformément au procédé selon l'invention peut également contenir au moins un composé protéinique, celui-ci pouvant notamment agir en tant qu'agent de stabilisation de ladite émulsion, en particulier en tant qu'agent de surface.

Selon une variante du procédé de traitement d'émulsion selon l'invention, l'émulsion devant être cassée par ou moins une cyclodextrine se présente sous la forme d'une émulsion ou d'une micro-émulsion de type huile dans eau (H/E).

Dans un tel cas de figure, largement rencontré au niveau des co-produits, produits intermédiaires, rejets, effluents et eaux résiduaires traités industriellement, l'émulsion peut contenir un ou plusieurs agents de surface non ioniques dont la valeur de HLB ("Hydrophilic - Lipophilic Balance") se situe entre environ 8,0 et environ 18,0 ou encore une association de plusieurs agents de surface non ioniques dont l'un au moins aura une HLB inférieure à 8,0 ou supérieure à 18,0, ladite association présentant néanmoins une valeur de HLB se situant entre environ 8,0 et environ 18,0.

Pour plus de détails concernant les agents de surface pouvant être contenus dans les émulsions devant être cassées selon l'invention et sur les propriétés desdits agents de surface, l'on se reportera à l'un ou l'autre des ouvrages ou documents ci-après, lesquels sont incorporés à la présente description :
- "Agents de surface et émulsions" GALENICA, vol. 5.7, édité par les éditions Technique et Documentation Lavoisier sous la direction de F. PUISIEUX et M. SEILLER, 1983,
- "Surfactants UK - A catalogue of surface active agents available in the United Kingdom" par G.L. HOLLIS, éditions TERGO-DATA, 1976,
- "Mc Cutcheon's Emulsifiers and Detergents International Edition 1987",
- "Surfactants : Designing Structure for Performance" par M.J. ROSEN dans "CHEMTECH", may 1985, pp 292-298,
- "Amphoteric Surfactants" par A.J. O'LENICK et collaborateurs dans "HAPPI", novembre 1986, pp 70-74, 125-126.

Selon une autre variante de l'invention, l'émulsion devant être cassée contient déjà une cyclodextrine. Cet aspect très particulier et surprenant du procédé objet de la présente invention permet de rappeler encore l'abondante littérature technique et scientifique déjà publiée et mise en pratique industriellement en ce qui concerne l'utilisation de cyclodextrines, en particulier de bétacyclodextrine, en vue spécifiquement, non pas de déstabiliser ou casser des émulsions conformément à la présente invention, mais au contraire de former ou stabiliser celles-ci (cf supra).

Selon une autre variante du procédé objet de la présente invention, l'émulsion est traitée par une quantité d'au moins une cyclodextrine telle que le rapport pondéral entre d'une part cyclodextrine(s) et d'autre part la quantité de corps gras contenue dans l'émulsion devant être traitée, se situe entre environ 0,010/1 et environ 10/1, de préférence entre 0,015/1 et 5/1 et en particulier entre 0,015/1 et 3/1.

Il est entendu, comme déjà précisé, que par "corps gras" on inclut, entre autres, tout mélange d'au moins deux corps gras, et notamment d'au moins deux huiles ou d'au moins une huile et une graisse.

Selon une autre variante du procédé objet de la présente invention, l'émulsion est traitée par une quantité telle d'au moins une cyclodextrine, que le rapport pondéral entre d'une part cyclodextrine(s) et d'autre part la quantité d'agent de surface contenue dans l'émulsion devant être traitée, se situe entre environ 0,5/1 et environ 20/1, en particulier entre 1/1 et 10/1.

Il est entendu, comme déjà précisé, que par "agent de surface" on inclut, entre autres, tout mélange d'au moins deux agents de surface, ceux-ci pouvant présenter des nature chimique et caractéristiques (HLB notamment) proches ou éloignées.

Selon une autre variante du procédé objet de l'invention, l'émulsion devant être traitée par au moins une cyclodextrine se présente sous la forme d'une émulsion de type "huile dans eau" (H/E). Dans ce cas, ladite émulsion H/E peut contenir un agent de surface non ionique de type agent émulsifiant huile dans eau (émulsifiant H/E), en particulier un agent émulsifiant présentant une HLB se situant entre environ 8,0 et environ 18,0.

Ledit agent émulsifiant H/E non ionique peut consister en une association d'au moins deux agents émulsifiants, ceux-ci pouvant présenter des nature chimique et caractéristiques (HLB notamment) proches ou éloignées, étant entendu que la HLB de ladite association, calculable comme décrit dans l'ouvrage précité de F. PUISIEUX et M. SEILLER, se situe entre environ 8,0 et environ 18,0.

Selon une autre variante du procédé de traitement d'une émulsion objet de l'invention, l'étape caractéristique selon laquelle ladite émulsion est cassée par au moins une cyclodextrine peut être précédée ou suivie d'une étape de mise en oeuvre d'un moyen classique, de nature chimique ou physico-chimique tel que détaillé ci-avant, de déstabilisation ou de cassage d'émulsion. L'émulsion peut également être traitée par au moins une cyclodextrine concomitamment à une étape de mise en oeuvre d'un tel moyen classique de déstabilisation ou de cassage d'émulsion.

En particulier, l'étape caractéristique du procédé objet de la présente invention peut être associée à une étape concomitante de centrifugation ou d'ultracentrifugation et/ou à une étape antérieure de mise en oeuvre d'un réactif de désémulgation. Comme il sera d'ailleurs illustré au niveau des exemples ci-après, l'étape de traitement d'une émulsion par une cyclodextrine, en vue de casser ladite émulsion peut être précédée par une étape de mise en oeuvre, au sein de ladite émulsion, d'un réactif de désémulgation de nature minérale comme peut l'être, dans certaines circonstances, l'acide sulfurique.

Et il est tout à fait remarquable de noter d'ores et déjà que si l'acide sulfurique peut, dans certaines conditions, n'assurer que faiblement sa fonction d'agent de désémulgation, une cyclodextrine comme la BCD par contre se révèle particulièrement apte et ce, dans les mêmes conditions et pour des concentrations en BCD pouvant être très faibles, à casser plus efficacement des émulsions.

La Société Demanderesse a d'ailleurs trouvé, de façon surprenante, qu'en termes de capacité à casser une émulsion, il pouvait exister une synergie d'action entre d'une part un réactif classique de désémulgation comme l'acide sulfurique et d'autre part une cyclodextrine comme la béta-cyclodextrine.

Un objet de la présente invention consiste donc en un procédé de traitement d'émulsion caractérisé par le fait qu'il comprend, en outre, une étape de traitement de ladite émulsion par au moins un moyen classique de cassage d'émulsion, notamment par au moins un réactif de désémulgation, ladite étape étant, de préférence, menée antérieurement à l'étape de cassage de l'émulsion par au moins une cyclodextrine.

Le procédé de traitement d'émulsion selon l'invention met donc en oeuvre un moyen, en l'occurrence une cyclodextrine, nouveau dans son application et possédant des avantages indéniables par rapport à l'un ou l'autre des moyens traditionnels de cassage d'émulsion : facilité et coût réduit d'utilisation, grande efficacité, applicabilité à une très large gamme d'émulsions, de toutes origines, natures, compositions et destinations.

De plus, les cyclodextrines étant issues de matières végétales renouvelables, à savoir des matières amylacées, leur non-toxicité et leur biodégradabilité en font des produits parfaitement tolérés par l'homme et l'environnement. Comme il a déjà été souligné, le procédé objet de la présente invention peut être appliqué à toute industrie devant préparer et/ou traiter tous types d'émulsions et notamment les industries agroalimentaires comme, par exemple, les unités de traitement de graines oléagineuses et de corps gras, les charcuteries et salaisonneries, les abattoirs et stations d'équarissage, les industries métallurgiques, les industries mécaniques et du travail des métaux, en particulier pour le traitement des fluides de coupe, les industries du textile, en particulier les industries du lavage et du dessuintage de la laine, notamment en vue de l'amélioration de la qualité, la présentation et des conditions de travail subséquentes de celle-ci et/ou de la récupération et du post-traitement de la suintine.

Le procédé selon l'invention peut donc notamment être caractérisé par le fait que l'émulsion est constituée par un fluide de coupe pour le travail des métaux ou par une eau de lavage ou de dessuintage de la laine.

En outre, le traitement d'une émulsion par au moins une cyclodextrine conformément au procédé conforme à l'invention permet notamment de récupérer, en tout ou partie, pour le moins le corps gras contenu dans l'émulsion de départ et, si cela est souhaité et économiquement viable, l'agent de surface éventuellement contenu dans ladite émulsion.

Cette récupération peut notamment se faire à partir de toute phase, quelles que soient sa nature (aqueuse ou grasse, notamment huileuse) et sa composition, contenant tout ou partie du corps gras et/ou de l'agent de surface éventuel, ledit corps gras et l'agent de surface pouvant éventuellement se trouver, en tout ou partie, sous la forme de complexes avec la cyclodextrine.

En particulier, et comme il sera décrit au niveau de certains exemples qui suivent, le procédé de cassage d'émulsion conforme à l'invention permet généralement d'obtenir une phase "légère" ou supérieure, de nature essentiellement grasse, contenant tout ou partie du corps gras initialement présent dans l'émulsion de départ.

Cette phase supérieure constitue alors, en regard de l'émulsion de départ, une matière enrichie en corps gras, ne contenant généralement pas de quantités significatives d'eau et de cyclodextrine. Ladite matière peut alors et ce, par toute technique classique de séparation de phases, être séparée, en tout ou partie, des autres phases résultant du cassage de l'émulsion.

Par "technique classique de séparation de phases", on entend, entre autres, toute technique, qu'elle soit menée en continu ou en discontinu, d'extraction / centrifugation ou de décantation, y compris tout procédé combinant, éventuellement sur une même installation, les opérations de décantation et de centrifugation.

La matière ainsi obtenue, par exemple la phase supérieure grasse résultant du traitement des eaux de lavage de la laine (émulsions H/E) par de la BCD, peut ensuite être traitée à diverses fins, en particulier en vue de la récupérer, en l'état ou non, totalement ou en partie, soit pour la préparation ou la constitution subséquente, par tous moyens, y compris par mise en oeuvre d'un dispositif de recyclage, de nouvelles émulsions, en particulier d'émulsions H/E, soit pour l'extraction subséquente, sous forme plus ou moins purifiée et selon un schéma opératoire plus ou moins complexe, de tout corps gras contenu dans ladite matière, par exemple de tout constituant lipophile issu de la suintine ou "graisse de laine", et notamment pour l'extraction subséquente de la lanoline.

D'autre part, et comme il sera décrit au niveau de certains exemples qui suivent, le procédé de cassage d'émulsion selon l'invention permet généralement d'obtenir une phase "lourde" ou inférieure, de nature essentiellement aqueuse et contenant des complexes insolubles entre cyclodextrine et corps gras et, éventuellement, des complexes entre cyclodextrine et agent de surface. Lesdits complexes, en particulier ceux associant cyclodextrine et corps gras, peuvent être séparés de ladite phase par tout moyen approprié et notamment par simple décantation ou centrifugation.

Ainsi, toute matière contenant lesdits complexes ou essentiellement constituée, sous forme de décantat ou de précipité par exemple, par lesdits complexes, peut ensuite être traitée à diverses fins. Cette matière, constituée par exemple par la phase inférieure aqueuse résultant du cassage d'une émulsion à vocation lubrifiante par de la BCD ou, par exemple, par les seuls complexes insolubles contenus dans ladite phase, peut ensuite être traitée à diverses fins, en particulier en vue de la récupérer, en l'état ou non, totalement ou en partie, soit pour la préparation ou la constitution subséquente, par tous moyens, y compris par mise en oeuvre d'un dispositif de recyclage, de nouvelles émulsions, en particulier d'émulsions H/E, soit pour l'extraction subséquente, sous forme plus ou moins purifiée et selon un schéma opératoire plus ou moins complexe, de tout corps gras contenu dans ladite matière.

En suite de quoi, un objet de la présente invention consiste en un procédé de récupération d'un corps gras contenu dans une matière caractérisé par le fait que ladite matière a été obtenue après traitement d'une émulsion, en particulier d'une émulsion huile dans eau, cassée au moyen d'au moins une cyclodextrine.

En particulier, ladite matière peut être essentiellement constituée par tout ou partie, soit de la phase grasse obtenue après cassage d'une émulsion, soit de la phase aqueuse contenant des complexes insolubles cyclodextrine / corps gras obtenue après cassage d'une émulsion, soit des complexes insolubles contenus dans ladite phase aqueuse, soit de ladite phase aqueuse débarrassée, au moins partiellement, des complexes insolubles qu'elle contient, soit d'un mélange quelconque d'au moins deux quelconques desdites matières.

En outre, lorsque la matière à partir de laquelle l'on souhaite effectuer la récupération d'au moins un corps gras contient des complexes cyclodextrine / corps gras ainsi que, éventuellement, des complexes cyclodextrine / agent de surface, y compris lorsque ladite matière est essentiellement constituée par des complexes insolubles, ladite récupération peut être obtenue au travers d'une technique de raffinage mettant en oeuvre un traitement thermique, un traitement par solvant, polaire ou apolaire, et/ou un traitement d'hydrolyse de la cyclodextrine.

De tels traitements de raffinage, applicables, par exemple, à toute matière, y compris tout décantat ou précipité, contenant des complexes cyclodextrine / corps gras, obtenue subséquemment au traitement d'une émulsion, par exemple un fluide de coupe usagé ou une eau de lavage de la laine, par une cyclodextrine, pourront consister en l'un et/ou l'autre des procédés décrits au niveau des brevets FR 2.657.627, FR 2.657.545, EP 440.537 ou EP 440.538, dont la Société Demanderesse est par ailleurs titulaire.

En suite de quoi, la présente invention a également pour objet un nouveau procédé de récupération de corps gras tel que défini précédemment pour lequel la matière obtenue après cassage de l'émulsion contient des complexes cyclodextrine / corps gras et est soumise à l'un quelconque, au moins, des traitements de raffinage précités.

L'invention pourra être encore mieux comprise à l'aide des exemples qui suivent et qui font état de certains modes de réalisation particulièrement avantageux de l'invention.

### EXEMPLE 1

Dans une solution à 0,5 g/l d'un agent de surface non ionique commercialisé par la société BASF sous l'appellation "LUTENSOL AP9" (nonylphénol polyéthoxylé présentant une HLB de 13 environ), on introduit, par ajouts successifs, des quantités croissantes de béta-cyclodextrine ("BCD") commercialisée par la Société Demanderesse sous la marque KLEPTOSE^{R}. Le premier ajout de BCD KLEPTOSE^{R} correspond à une quantité telle que la concentration de la solution en BCD est de 0,05 % en poids. Pour chaque ajout supplémentaire, on introduit la même quantité de BCD dans la solution, soit 0,05 % en poids. Par ajouts successifs de BCD, la concentration en BCD de la solution augmente ainsi régulièrement de 0,05 à 1,8 % en poids. A chaque ajout de BCD KLEPTOSE^{R}, la solution (contenant l'agent de surface et la cyclodextrine) est agitée mécaniquement et sa tension superficielle est mesurée à l'aide d'un tensiomètre à plaque DOGNON ABRIBAT et ce, selon la méthode classique dite "de WILHELMY".

La même étude est réalisée à partir de systèmes simples (solutions) contenant respectivement 1 g/l, 2 g/l, 3 g/l et 4 g/l d'agent de surface, ci-après désigné "AP9".

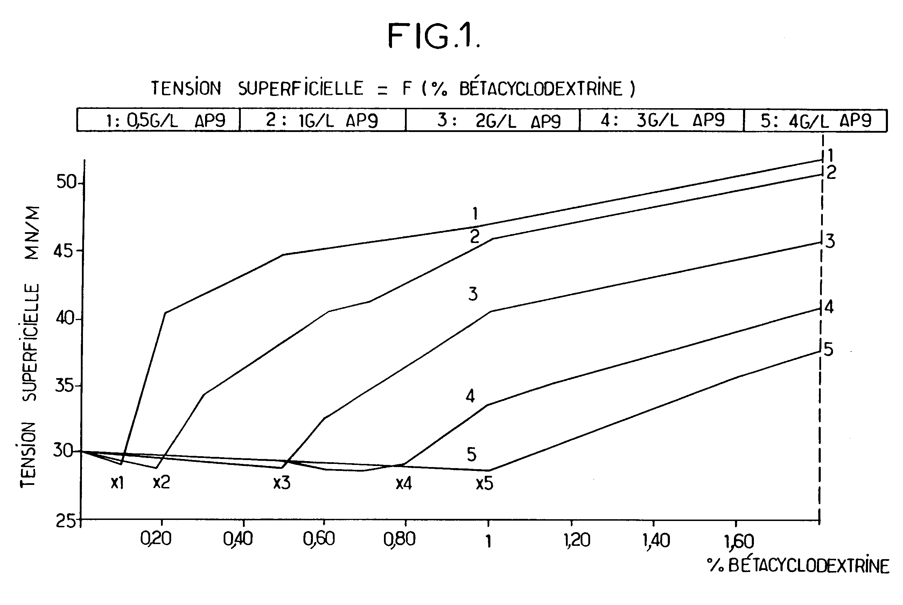

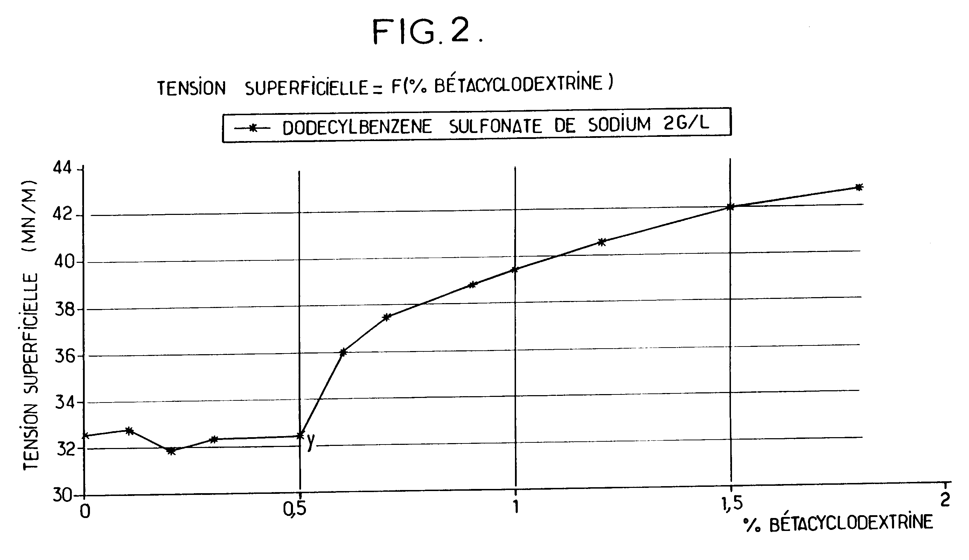

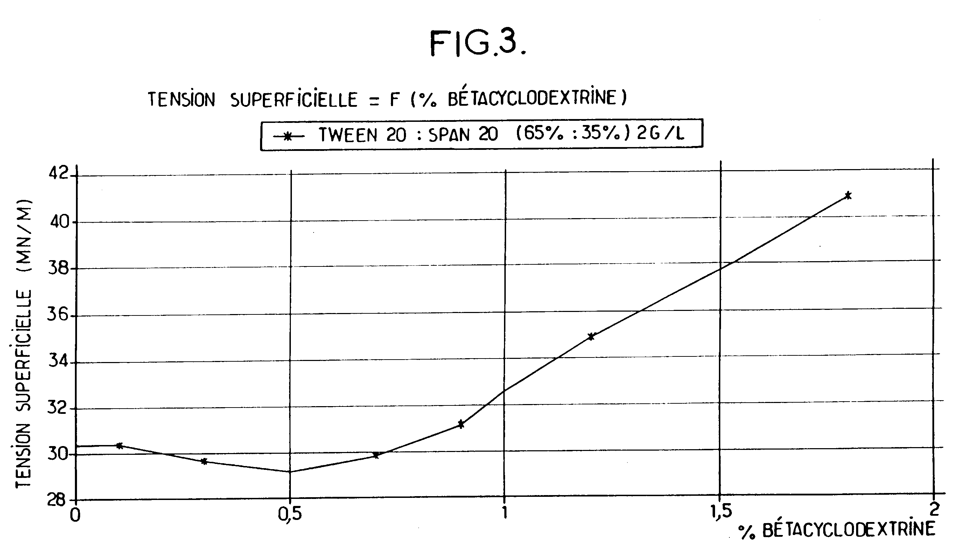

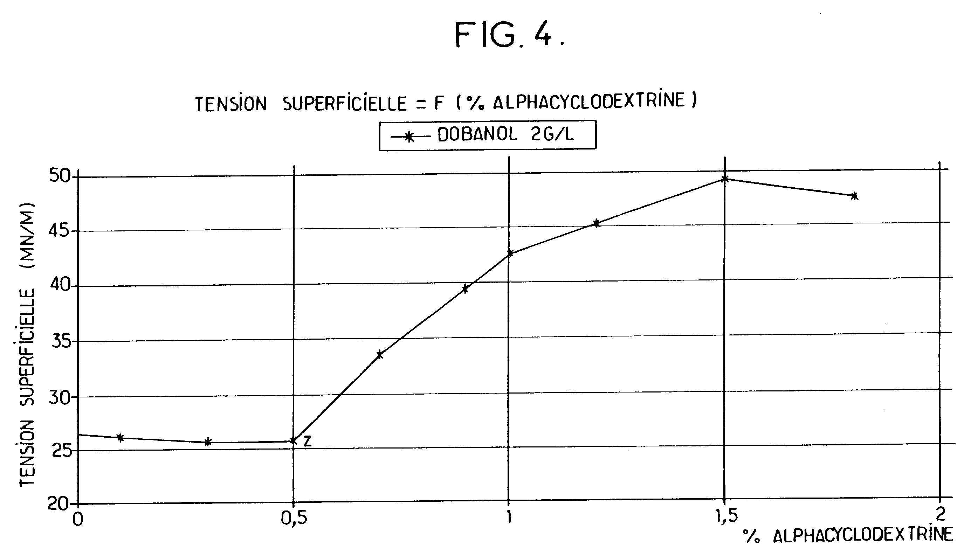

Les valeurs de tension superficielle, exprimées en millinewtons / mètre (mN/m), obtenues en fonction de la concentration en poids de la solution respectivement en BCD (exprimée en %) et en AP9 (exprimée en g/l), sont représentées par les cinq courbes apparaissant au niveau de la Figure I.

On observe qu'il existe, pour chacune des cinq courbes, un point de rupture de pente (noté respectivement x1, x2, x3, x4 et x5). De façon remarquable, ce point se situe toujours non seulement à une valeur de tension superficielle inférieure à la tension superficielle de départ (30 mN/m) mais encore à une valeur de tension superficielle à peu près constante, soit à environ 28,5 - 29 mN/m et ce, quelle que soit la concentration en agent de surface de la solution.

La Société Demanderesse soulève l'hypothèse selon laquelle, à l'ensemble de ces points de rupture, correspondrait une même entité spécifique associant la BCD et l'agent de surface AP9, entité pouvant être reprise sous le vocable de "complexe" tel qu'utilisé par ailleurs. Sans vouloir être liée par une théorie particulière, la Société Demanderesse conçoit que pour chacun de ces points spécifiques, la solution étudiée ne contiendrait significativement plus d'agent de surface "libre".

Au-delà de chacun de ces points significatifs, la cyclodextrine serait en excès par rapport à l'agent de surface et, globalement, inhiberait l'action de celui-ci, inhibition se traduisant par une augmentation significative de la tension superficielle de la solution.

Cependant, il est surprenant de remarquer qu'à partir de chacun de ces cinq points x1 à x5, l'adjonction de la même quantité de cyclodextrine dans la solution, par exemple de 0,1 % de BCD, provoque, selon les courbes 1 à 5, un effet de nature pour le moins qualitative très différent à savoir, une augmentation de tension superficielle plus ou moins brutale. Ainsi, à partir du point x1, l'adjonction de 0,1 % de BCD dans la solution a pour effet d'augmenter la tension superficielle de ladite solution de la valeur d'environ 29 mN/m à la valeur d'environ 40 mN/m, soit une augmentation d'environ 11 mN/m (cf courbe 1).

De même, à partir respectivement des points x2 à x5, l'adjonction de 0,1 % de BCD dans chacune des solutions a pour effet d'augmenter la tension superficielle de la solution de :
- environ 5 mN/m pour la courbe 2,
- environ 3,5 mN/m pour la courbe 3,
- environ 2,5 mN/m pour la courbe 4, et
- environ 1 mN/m pour la courbe 5.

Ces résultats présentent un caractère tout à fait surprenant qui ne peut être expliqué aujourd'hui de façon scientifique.

### EXEMPLE 2

Dans un bécher de 500 ml, on verse 450 g d'eau déminéralisée dans lesquels on introduit ensuite 4 g d'huile de colza.

On ajoute ensuite 1 g de l'agent de surface non ionique LUTENSOL AP9 tel que décrit au niveau de l'EXEMPLE 1 ci-avant et on ajuste le poids de la composition à 500 g par ajout d'eau déminéralisée. L'ensemble est ensuite émulsionné à l'aide d'un homogénéisateur à turbine de type "ULTRATURAX" et ce, pendant 2 minutes à 10 000 tours/mn.

Le pH du système complexe (émulsion) stable ainsi obtenu est d'environ 10. Cette émulsion est ensuite divisée en 5 prises de 100 g chacune. Ces 5 prises sont placées dans 5 béchers. Dans chacun desdits béchers, on ajoute, en une seule fois, respectivement 0 % (témoin), 0,3 %, 0,5 %, 1,0 % et 1,8 % de BCD KLEPTOSE^{R} se présentant sous forme de poudre. Chacune des 5 émulsions, adjuvantée ou non (témoin) en BCD, est ensuite homogénéisée très doucement à l'aide d'un barreau magnétique pendant 5 mn puis répartie dans des tubes à essai de 30 ml. Les tubes, bouchés, sont placés dans une étuve à 50°C pendant 24 heures. Après ce délai, on effectue l'observation de chacun de ces échantillons. Les résultats descriptifs des différentes phases obtenues sont rassemblés au niveau du tableau I ci-dessous.

**TABLEAU I**

| | TEMOIN (0% BCD) | TEMOIN + 0,3% BCD | TEMOIN + 0,5% BCD | TEMOIN + 1,0% BCD | TEMOIN + 1,8% BCD |
|---|---|---|---|---|---|
| 1ère PHASE (SUPERIEURE) | EMULSION HOMOGENE BLANC LAITEUX | EMULSION HOMOGENE BLANC LAITEUX | EMULSION HOMOGENE BLANC LAITEUX | FINE PELLICULE HUILEUSE (GLOBULES HUILEUX) | FINE PELLICULE HUILEUSE (GLOBULES HUILEUX) |
| 2ème PHASE (INTERMEDIAIRE) | - | - | - | EMULSION BLANC LAITEUX | EMULSION BLANC LAITEUX |
| 3ème PHASE (INFERIEURE) | - | - | - | PRECIPITE BLANC HAUTEUR : Y1 | PRECIPITE BLANC HAUTEUR : Y2>Y1 |

On constate globalement que la mise en oeuvre d'une cyclodextrine comme la BCD KLEPTOSE^{R} permet le cassage d'une émulsion telle que celle étudiée dans cet EXEMPLE 2. Ce cassage se traduit, dans le cas présent, par le relarguage d'huile en surface et l'apparition de trois phases de natures et compositions différentes et ce, à partir d'une émulsion homogène parfaitement stable.

La phase inférieure (précipité blanc) est une matière contenant, principalement sous forme de complexes, de l'huile de colza et de la BCD, ainsi que des traces d'agent de surface LUTENSOL AP9.

### EXEMPLE 3

Le même mode opératoire que celui décrit au niveau de l'EXEMPLE 2 est mis en oeuvre si ce n'est qu'avant la répartition de l'émulsion en 5 prises de 100 g chacune, on rectifie le pH de ladite émulsion à une valeur de 2 environ et ce, par introduction d'acide sulfurique.

Les résultats concernant la description des échantillons après un stockage de 24 heures dans une étuve à 50°C sont rassemblés dans le tableau II ci-après.

**TABLEAU II**

| | TEMOIN (0% BCD) | TEMOIN + 0,3% BCD | TEMOIN + 0,5% BCD | TEMOIN + 1,0% BCD | TEMOIN + 1,8% BCD |
|---|---|---|---|---|---|
| 1ère PHASE (SUPERIEURE) | EMULSION HOMOGENE BLANC LAITEUX | HUILE | HUILE | HUILE HAUTEUR : Z1 | HUILE HAUTEUR : Z2 < Z1 |
| 2ème PHASE (INTERMEDIAIRE) | - | COURONNE BLANCHE D'ASPECT NUAGEUX HAUTEUR : X1 | COURONNE BLANCHE D'ASPECT NUAGEUX HAUTEUR : X2<X1 | SOLUTION LIMPIDE | SOLUTION LIMPIDE |
| 3ème PHASE (INFERIEURE) | - | SOLUTION LIMPIDE | SOLUTION LIMPIDE | PRECIPITE BLANC HAUTEUR : Y1 | PRECIPITE BLANC HAUTEUR : Y2<Y1 |

On constate que, dans le cas présent, l'émulsion témoin, à savoir une émulsion traitée par un additif classique de désémulgation comme l'acide sulfurique mais non traitée par une cyclodextrine, reste parfaitement stable et homogène, et ne subit aucun phénomène de cassage. A l'inverse, les émulsions traitées par au moins une cyclodextrine conformément à la présente invention, sont cassées et ce, dès la mise en oeuvre de faibles concentrations de cyclodextrine (en l'occurrence avec 0,3 % en poids, ou même moins, de BCD KLEPTOSE^{R}). Il est remarquable de noter que, quelle que soit la concentration en BCD introduite, la phase aqueuse majoritaire, laquelle peut constituer la phase inférieure (cf essais avec 0,3 ou 0,5 % de BCD) ou la phase intermédiaire (cf essais avec 1,0 ou 1,8 % de BCD) obtenue après cassage de l'émulsion, se présente comme une matière claire et limpide. Pour des concentrations en BCD se situant au-delà du point caractéristique x3 décrit à l'EXEMPLE 1 (cf courbe 3 - fig I, correspondant à une concentration en LUTENSOL AP9 de 2 g/l), on obtient, en tant que phase inférieure, une matière se composant essentiellement d'un précipité blanc associant, principalement sous forme de complexes, de l'huile de colza et de la BCD, ainsi que des traces d'agent de surface LUTENSOL AP9.

Si l'on compare, par ailleurs, les résultats obtenus au niveau respectivement des TABLEAUX 1 et 2, on constate un effet qui peut être qualifié de synergique entre d'une part, la cyclodextrine et d'autre part, l'acide sulfurique (ou le pH) en ce qui concerne la fonction de cassage d'une émulsion.

### EXEMPLE 4

Dans cet exemple, on regarde la capacité éventuelle de cassage d'émulsion de différents produits constitués de mono-, di- et/ou polysaccharides susceptibles de résulter de l'hydrolyse, plus ou moins poussée, d'une cyclodextrine comme la BCD ou de produits contenant une forte proportion de tels mono-, di et/ou polysaccharides.

Les produits étudiés consistent respectivement en :
- du dextrose monohydrate (monosaccharide),
- du maltose (disaccharide),
- un hydrolysat d'amidon de type GLUCIDEX^{R} 39,
- un hydrolysat d'amidon de type GLUCIDEX^{R} 40, et
- un hydrolysat d'amidon de type GLUCIDEX^{R} 47.

Les produits précités de la gamme GLUCIDEX^{R} sont commercialisés par la Société Demanderesse. Ils sont constitués d'un mélange de mono-, di- et polysaccharides et notamment de polysaccharides présentant un degré de polymérisation de 3 à 7.

Chacun de ces 5 produits est introduit, à raison de 1,5 % en poids, dans une émulsion dont le corps gras est constitué d'huile de colza et l'agent de surface est constitué de produit "LUTENSOL AP9" (taux d'incorporation 2 g/l). Le pH de l'émulsion, de l'ordre de 10, peut (cf EXEMPLE 3) ou non (cf EXEMPLE 2) être rectifié à une valeur de 2 environ (par mise en oeuvre d'acide sulfurique) avant introduction du produit testé. L'observation des échantillons après stockage de 24 heures dans une étuve à 50°C permet de constater qu'aucun des cinq produits testés n'a la moindre capacité à casser l'émulsion en question, que cette dernière présente d'ailleurs un pH rectifié ou non.

Dans tous les cas, l'introduction de l'un quelconque de ces cinq produits n'a aucun effet sur l'émulsion de départ, laquelle se présente toujours, après traitement, sous son aspect homogène et blanc laiteux. Par contre, l'introduction de 1,5 % en poids de BCD dans l'émulsion (dont le pH est ou non rectifié) confirme les observations faites au niveau des EXEMPLES 2 et 3 en ce qui concerne les effets de cassage d'émulsion procurés par la mise en oeuvre d'une cyclodextrine. Elle confirme également la synergie d'action pouvant exister entre d'une part, une cyclodextrine et d'autre part, un réactif de désémulgation comme l'acide sulfurique. Il est difficile d'avancer une quelconque théorie concernant cet effet de synergie. En tout état de cause, il ne semble pas que ladite synergie soit à mettre en relation avec une hypothétique hydrolyse de la cyclodextrine par l'acide sulfurique.

### EXEMPLE 5

Dans une solution à 2 g/l d'un agent de surface ionique, en l'occurrence du dodécylbenzènesulfonate de sodium commercialisé par FLUKA, on ajoute un pourcentage en poids grandissant de cyclodextrine, à savoir la BCD KLEPTOSE^{R} commercialisée par la Société Demanderesse.

A chaque ajout de BCD, la solution est homogénéisée par agitation magnétique et la tension superficielle de la solution est évaluée comme décrit précédemment.

Les valeurs obtenues, exprimées en mN/m, sont reportées sur la courbe apparaissant sur la FIGURE II.

On constate que, dans le cas présent d'une solution de dodécylbenzènesulfonate de sodium à 2 g/l, des concentrations en BCD allant jusqu'à 0,5 % en poids, n'augmentent aucunement la tension superficielle de ladite solution. Au contraire, au point de rupture y, la tension superficielle est légèrement plus faible (≈ 32,4 mN/m) que la tension superficielle initiale (≈ 32,6 mN/m).

### EXEMPLE 6

Dans un bécher de 500 ml, on verse 450 g d'eau déminéralisée dans lesquels on introduit ensuite 4 g d'huile minérale d'appellation "ENERPAR" commercialisée par BRITISH PETROLEUM. On ajoute ensuite 1 g de dodécylbenzènesulfonate de sodium fourni par FLUKA puis on ajuste le poids à 500 g par ajout d'eau déminéralisée. L'ensemble est ensuite émulsionné à l'aide d'un homogénéisateur à turbine de type ULTRATURAX et ce, pendant 2 mn à 10 000 tours/mn.

Le pH de l'émulsion ainsi obtenue est alors rectifié à une valeur de 2,9 environ par ajout d'acide sulfurique.

Cette émulsion est ensuite divisée en 5 prises de 100 g chacune. Ces 5 prises sont placées dans 5 béchers. Dans chacun desdits béchers on ajoute, en une seule fois, respectivement 0 % (témoin), 0,3 %, 0,5 %, 1,0 % et 1,8 % de BCD KLEPTOSE^{R} se présentant sous forme de poudre. Chacune des 5 émulsions, adjuvantée ou non (témoin) en BCD, est ensuite homogénéisée très doucement à l'aide d'un barreau magnétique pendant 5 mn puis répartie dans des tubes à essai de 30 ml. Les tubes, bouchés, sont placés dans une étuve à 50°C pendant 24 heures. Après ce délai, on effectue l'observation de chacun de ces échantillons. Les résultats descriptifs des différentes phases obtenues sont rassemblés au niveau du tableau III ci-dessous.

**TABLEAU III**

| | TEMOIN (0% BCD) | TEMOIN + 0,3% BCD | TEMOIN + 0,5% BCD | TEMOIN + 0,8% BCD | TEMOIN + 1,0% BCD |
|---|---|---|---|---|---|
| 1ère PHASE (SUPERIEURE) | EMULSION BLANC LAITEUX, CREMEUSE | EMULSION BLANC LAITEUX, CREMEUSE | EMULSION BLANC LAITEUX, CREMEUSE | PHASE HUILEUSE | PHASE HUILEUSE |
| | QUELQUES GLOBULES HUILEUX TAILLE : X0 | QUELQUES GLOBULES HUILEUX TAILLE : X1>X0 | QUELQUES GLOBULES HUILEUX TAILLE : X2 > X1 | | |
| 2ème PHASE (INFERIEURE) | SOLUTION TRANSLUCIDE | SOLUTION TRANSLUCIDE | SOLUTION TRANSLUCIDE | SOLUTION TRANSLUCIDE | SOLUTION TRANSLUCIDE |

On constate que la présence de BCD dans l'émulsion eau/ huile minérale/ dodécylbenzènesulfonate de sodium améliore le cassage de ladite émulsion et ce, dès les faibles doses d'incorporation (0,3 - 0,5 %).

De telles doses accentuent déjà la coalescence des gouttelettes de corps gras (augmentation de la taille des globules huileux) par rapport aux observations faites à partir de l'émulsion témoin.

On note que pour des concentrations en BCD supérieures à celle correspondant au point caractéristique y, par exemple à 0,8 et 1 % de BCD, le relarguage d'huile minérale est très marqué. Le cassage d'émulsion, déjà apparent pour des doses d'incorporation en BCD inférieures à celle correspondant au point y, est donc encore amélioré par de telles concentrations.

Dans le cas présent, on n'observe pas dans la matière correspondant à la phase essentiellement aqueuse ("solution translucide" - phase inférieure), la précipitation apparente d'entités ou de complexes insolubles associant cyclodextrine et corps gras. On peut poser l'hypothèse selon laquelle, pour ces essais, les concentrations en BCD étudiées sont trop faibles pour permettre la formation de tels entités ou complexes.

### EXEMPLE 7

Le même protocole opératoire que celui décrit au niveau de l'EXEMPLE 6 est mis en place, si ce n'est que dans le cas présent :
- l'huile minérale est remplacée par la même quantité d'huile végétale (huile de colza),
- le pH de l'émulsion obtenue est, avant incorporation de cyclodextrine (BCD KLEPTOSE^{R}), rectifié à une valeur de 2,3 environ (2,9 environ pour l'EXEMPLE 6), et
- on étudie également les effets de traitement de l'émulsion par une quantité de BCD de 1,5 % en poids. Les mêmes conclusions générales que celles découlant de l'EXEMPLE 6 peuvent être formulées, notamment l'observation selon laquelle de faibles concentrations en cyclodextrine (0,3 et 0,5 %) permettent déjà d'obtenir une émulsion cassée. Ce cassage est amélioré pour des concentrations en BCD supérieures à celle correspondant au point spécifique y (cf FIGURE II) avec, en outre, l'apparition d'une matière essentiellement composée d'un précipité blanc insoluble contenant des complexes cyclodextrine / corps gras et ce, lorsque l'on met en oeuvre 1,5 % en poids de BCD au sein de l'émulsion.

On notera d'ailleurs que, dans le cas des échantillons traités avec une quantité aussi élevée de BCD (1,5 % en poids), le processus de précipitation de complexes et donc le cassage de l'émulsion semble avoir été obtenu sans qu'aucun phénomène de coalescence macroscopiquement visible n'ait pu être décelé de façon préliminaire.

### EXEMPLE 8

Dans un premier temps, on réalise une solution dans l'eau à 2 g/l d'un agent de surface se présentant sous la forme d'une association, comprenant 65 % en poids de TWEEN 20 (produit non ionique, HLB = 16,7) et 35 % en poids de SPAN 20 (non ionique, HLB = 8,6), ces deux produits étant commercialisés par I.C.I. On ajoute dans ladite solution un pourcentage croissant de cyclodextrine, en l'occurrence la BCD KLEPTOSE^{R} commercialisée par la Société Demanderesse.

A chaque ajout de BCD, la solution est homogenéisée par agitation magnétique et la tension superficielle de la solution est évaluée comme décrit précédemment. Les valeurs obtenues, exprimées en mN/m, sont reportées sur la courbe apparaissant sur la FIGURE III.

On constate que, dans le cas présent, des concentrations en BCD allant jusqu'à 0,7 % en poids environ n'augmentent aucunement la tension superficielle de la solution d'agent de surface associant TWEEN 20 et SPAN 20. Au contraire, pour ces concentrations, la tension superficielle initiale (≈ 30,4 mN/m) diminue plus ou moins notablement avec une valeur minimum (≈ 29,1 mN/m) atteinte pour une concentration en BCD de 0,5 % en poids.

### EXEMPLE 9

Dans un bécher de 500 ml, on introduit successivement 300 g d'huile de paraffine de qualité pharmaceutique, 1 g d'une association d'agents de surface TWEEN 20 / SPAN 20 telle que décrite au niveau de l'EXEMPLE 8 et 199 g d'eau déminéralisée.

L'ensemble est ensuite émulsionné à l'aide d'un homogénéisateur à turbine de type ULTRATURAX et ce, pendant 2 mn à 10.000 tours/mn. L'émulsion obtenue dont le pH est d'environ 7,2, est alors divisée en 4 prises de 125 g dans chacune desquelles sont introduits respectivement 0 % (témoin), 0,5 %, 1,0 % et 1,5 % de BCD KLEPTOSE^{R}. Chacune des prises d'essai est ensuite centrifugée à l'aide d'une centrifugeuse HERMLE Z 230 A à la vitesse de 5.500 tours/minutes pendant 5 mn.

L'observation des prises d'essai a lieu immédiatement après centrifugation. Les résultats descriptifs des différentes phases obtenues sont rassemblés au niveau du TABLEAU IV ci-après.

**TABLEAU IV**

| | TEMOIN (0% BCD) | TEMOIN + 0,5% BCD | TEMOIN + 1,0% BCD | TEMOIN + 1,5% BCD |
|---|---|---|---|---|
| 1ère PHASE (SUPERIEURE) | EMULSION BLANCHE ET DENSE | EMULSION BLANCHE ET DENSE | PHASE HUILEUSE | PHASE HUILEUSE |
| | | HAUTEUR : H1 | HAUTEUR : G1 | HAUTEUR G2 > G1 |
| 2ème PHASE | SOLUTION TROUBLE | SOLUTION TROUBLE | EMULSION BLANCHE ET DENSE | EMULSION BLANCHE ET DENSE |
| | | | HAUTEUR : H2 > H1 | HAUTEUR : H3 < H2 |
| 3ème PHASE (EVENTUELLE) | - | PRECIPITE BLANC | SOLUTION TROUBLE | SOLUTION TROUBLE |
| 4ème PHASE (EVENTUELLE) | - | - | PHASE BLANCHE NUAGEUSE | PHASE BLANCHE NUAGEUSE |
| | | | HAUTEUR : K1 | HAUTEUR : K2 > K1 |
| 5ème PHASE (EVENTUELLE) | - | - | PRECIPITE BLANC | PRECIPITE BLANC |

De manière générale, on constate encore une fois que le traitement d'une émulsion par une cyclodextrine a pour effet de permettre ou d'améliorer le cassage de ladite émulsion.

Dans le cas présent, le fait que l'émulsion soit un système particulièrement complexe contenant, outre le corps gras, deux agents de surface de natures et propriétés différentes, rend encore plus difficile l'établissement d'une théorie rigoureusement scientifique en ce qui concerne la genèse et les modalités de ce processus de cassage.

La Société Demanderesse a toutefois recherché à déterminer et ce, par technique analytique infra-rouge, la nature des matières principales constitutives respectivement :
- du précipité blanc (3ème phase) obtenu avec 0,5 % de BCD,
- du mélange des "phase blanche nuageuse" (4ème phase) et précipité blanc (5ème phase) obtenus avec 1,5 % de BCD.

Ces investigations laissent entendre que le précipité obtenu avec 0,5 % de BCD est principalement constitué de complexes entre la cyclodextrine et les agents de surface. Ce précipité contient également de l'huile mais ce, en très faible concentration. Globalement, il y aurait donc association privilégiée de la BCD avec les agents de surface plutôt qu'avec le corps gras. D'autre part, l'analyse du mélange des 4ème et 5ème phases obtenues avec 1,5 % de BCD semble montrer qu'avec une telle concentration en cyclodextrine, la quasi-totalité de l'agent de surface a du être complexée et que la cyclodextrine a dû, dès lors, commencer à former, de manière significative, des complexes avec l'huile.

Dans le cas présent, cette amélioration constatée pour une faible concentration en cyclodextrine, semble devoir être mise en relation avec la formation de complexes cyclodextrine / agent de surface, ce dernier ne pouvant, dès lors, jouer totalement sa fonction d'agent émulsionnant huile / eau.

### EXEMPLE 10

Dans une solution à 2 g/l d'un tensio-actif non ionique commercialisé par la Société SHELL CHEMICALS sous l'appellation "DOBANOL 91-6" (alcool primaire éthoxylé ; HLB = 12,5), on ajoute un pourcentage en poids croissant d'alpha-cyclodextrine préparée par la Société Demanderesse.

A chaque ajout d'alpha-cyclodextrine (ci-après désignée "ACD"), la solution est homogénéisée par agitation magnétique et la tension superficielle de la solution est évaluée comme décrit précédemment. Les valeurs obtenues, exprimées en mN/m, sont reportées sur la courbe apparaissant sur la FIGURE IV.

On constate, notamment, que des concentrations en ACD allant jusqu'au moins 0,5 % en poids (cf point caractéristique z de la courbe - FIG. IV), n'augmentent aucunement la tension superficielle de la solution d'agent de surface constitué de "DOBANOL 91-6".

### EXEMPLE 11

Dans un bécher de 1 l, on introduit successivement 600 ml d'eau déminéralisée, 8 g d'huile de colza, 2 g d'agent de surface "DOBANOL 91-6" tel que décrit au niveau de l'EXEMPLE 10, puis 390 g d'eau déminéralisée.

L'ensemble est ensuite émulsionné à l'aide d'un homogénéisateur à turbine de type ULTRATURAX et ce, pendant 2 mn à 10.000 tours/mn. L'émulsion obtenue dont le pH est d'environ 7,3, est alors divisée en 6 prises dans chacune desquelles sont introduits respectivement 0 % (témoin), 0,5 %, 0,8 %, 1,0 %, 1,5 % et 2,0 % d'alpha-cyclodextrine (ACD). Chacune des prises d'essai est ensuite centrifugée à l'aide d'une centrifugeuse HERMLE Z 230 A à la vitesse de 5.500 tours/minutes pendant 5 mn.

L'observation des prises d'essai a lieu immédiatement après centrifugation. Les résultats descriptifs des différentes phases obtenues sont rassemblés au niveau du TABLEAU V ci-après.

**TABLEAU V**

| | TEMOIN (0% BCD) | TEMOIN + 0,5% BCD | TEMOIN + 0,8% BCD | TEMOIN + 1,0% BCD | TEMOIN + 1,5% BCD | TEMOIN + 2,0% BCD |
|---|---|---|---|---|---|---|
| 1ère PHASE (SUPERIEURE) | EMULSION BLANCHE CREMEUSE | QUELQUES GLOBULES HUILEUX | QUELQUES GLOBULES HUILEUX | QUELQUES GLOBULES HUILEUX | VOILE BLANC | VOILE BLANC |
| 2ème PHASE | EMULSION BLANCHE LAITEUSE | EMULSION BLANCHE CREMEUSE | EMULSION BLANCHE LAITEUSE | EMULSION BLANCHE LAITEUSE | SOLUTION TRANSLUCIDE | SOLUTION CLAIRE |
| 3ème PHASE (EVENTUELLE) | - | EMULSION BLANCHE LAITEUSE | PRECIPITE BLANC | PRECIPITE BLANC | PRECIPITE BLANC | PRECIPITE BLANC |
| | | | HAUTEUR : Y1 | HAUTEUR : Y2 > Y1 | HAUTEUR : Y3 > Y2 | HAUTEUR: Y4 > Y3 |

On constate globalement que le procédé selon l'invention permet également le cassage d'une émulsion par traitement de ladite émulsion avec une alpha-cyclodextrine (ACD).
Ce cassage peut être obtenu par mise en oeuvre de faibles concentrations d'ACD, par exemple 0,5 % en poids. Des essais supplémentaires menés par la Demanderesse ont d'ailleurs montré que, déjà avec 0,3 % d'ACD, on observait les prémices du cassage de l'émulsion étudiée, celle-ci présentant alors en surface quelques gros globules huileux.
Pour des concentrations en ACD se situant au-delà du point caractéristique z, par exemple pour des concentrations en ACD de 0,8 à 2 % en poids, on observe l'apparition d'un précipité blanc associant, essentiellement sous forme de complexes, l'huile végétale et l'ACD.

## Revendications

1. Procédé de traitement d'une émulsion caractérisé par le fait qu'il comprend une étape de cassage de ladite émulsion par au moins une cyclodextrine.

2. Procédé de traitement d'une émulsion selon la revendication 1 caractérisé par le fait que la cyclodextrine est choisie dans le groupe constitué par l'alpha-cyclodextrine, la béta-cyclodextrine et leurs dérivés.

3. Procédé de traitement d'une émulsion selon l'une des revendications 1 ou 2 caractérisé par le fait que l'émulsion devant être cassée par au moins une cyclodextrine, est constituée pour au moins 50 % environ de son poids, de préférence pour au moins 60 % environ de son poids, en au moins un corps gras et de l'eau.

4. Procédé de traitement d'une émulsion selon l'une quelconque des revendications 1 à 3 caractérisé par le fait que l'émulsion devant être cassée par au moins une cyclodextrine contient au moins un agent de surface de nature anionique, cationique, amphotère ou non-ionique.

5. Procédé de traitement d'une émulsion selon la revendication 4 caractérisé par le fait que l'agent de surface est de nature non ionique et présente une valeur de HLB se situant entre environ 8,0 et environ 18,0.

6. Procédé de traitement d'une émulsion selon l'une quelconque des revendications 1 à 5 caractérisé par le fait que l'émulsion devant être cassée par au moins une cyclodextrine est une émulsion stable contenant déjà une cyclodextrine, en particulier de la béta-cyclodextrine.

7. Procédé de traitement d'une émulsion selon l'une quelconque des revendications 1 à 6, caractérisé par le fait que l'émulsion est cassée par une quantité d'au moins une cyclodextrine telle que le rapport pondéral entre d'une part cyclodextrine(s) et d'autre part la quantité de corps gras contenue dans l'émulsion, se situe entre environ 0,010/1 et environ 10/1, de préférence entre 0,015/1 et 5/1 et en particulier entre 0,015/1 et 3/1.

8. Procédé de traitement d'une émulsion selon l'une quelconque des revendications 1 à 7, caractérisé par le fait que l'émulsion devant être cassée par au moins une cyclodextrine est une émulsion huile dans eau ("H/E") et que ladite émulsion contient, de préférence, en tant qu'agent de surface, au moins un émulsifiant huile dans eau ("H/E").

9. Procédé de traitement d'une émulsion selon l'une des revendications 4 ou 5, caractérisé par le fait que l'émulsion est cassée par une quantité d'au moins une cyclodextrine telle que le rapport pondéral entre d'une part cyclodextrine(s) et d'autre part la quantité d'agent(s) de surface contenue dans l'émulsion, se situe entre environ 0,5/1 et environ 20/1, en particulier entre 1/1 et 10/1.

10. Procédé de traitement d'une émulsion selon l'une quelconque des revendications 1 à 9, caractérisé par le fait qu'il comprend, en outre, une étape de traitement de l'émulsion par au moins un moyen classique de cassage d'émulsion, notamment par au moins un réactif de désémulgation, ladite étape étant, de préférence, menée antérieurement à l'étape de cassage de l'émulsion par au moins une cyclodextrine.

11. Procédé de traitement d'une émulsion selon l'une quelconque des revendications 1 à 10, caractérisé par le fait que l'émulsion est constituée par un fluide de coupe pour le travail des métaux ou par une eau de lavage ou de dessuintage de la laine.

12. Procédé de récupération d'un corps gras contenu dans une matière, caractérisé par le fait que ladite matière a été obtenue à partir d'une émulsion, en particulier d'une émulsion huile dans l'eau, préalablement cassée au moyen d'au moins une cyclodextrine.

13. Procédé de récupération d'un corps gras selon la revendication 12, caractérisé par le fait que la matière contenant le corps gras est essentiellement constituée par tout ou partie, soit de la phase grasse obtenue à partir de l'émulsion cassée, soit de la phase aqueuse contenant des complexes insolubles cyclodextrine / corps gras obtenue à partir de l'émulsion cassée, soit des complexes insolubles contenus dans ladite phase aqueuse, soit de ladite phase aqueuse débarrassée, au moins partiellement, des complexes insolubles qu'elle contient, soit d'un mélange quelconque d'au moins deux quelconques desdites matières.

14. Procédé de récupération d'un corps gras selon la revendication 12 ou la revendication 13, caractérisé par le fait que la matière obtenue à partir de l'émulsion cassée contient des complexes cyclodextrine / corps gras et que ladite matière est soumise à au moins un traitement de raffinage choisi dans le groupe comprenant les traitements thermiques, les traitements par solvant, polaire ou apolaire, et les traitements d'hydrolyse de la cyclodextrine.

## Claims

1. A process for treating an emulsion, characterised in that it involves a stage of breaking said emulsion with at least one cyclodextrin.

2. A process for treating an emulsion according to claim 1, characterised in that the cyclodextrin is selected from the group consisting of alpha-cyclodextrin, beta-cyclodextrin and derivatives thereof.

3. A process for treating an emulsion according to one of claims 1 or 2, characterised in that at least about 50% by weight, preferably at least about 60% by weight, of the emulsion which is to be broken by at least one cyclodextrin is made up of at least one fatty substance and water.

4. A process for treating an emulsion according to any one of claims 1 to 3, characterised in that the emulsion which is to be broken by at least one cyclodextrin contains at least one anionic, cationic, amphoteric or nonionic surface-active agent.

5. A process for treating an emulsion according to claim 4, characterised in that the surface-active agent is nonionic and has an HLB value between about 8.0 and about 18.0.

6. A process for treating an emulsion according to any one of claims 1 to 5, characterised in that the emulsion which is to be broken by at least one cyclodextrin is a stable emulsion already containing a cyclodextrin, in particular beta-cyclodextrin.

7. A process for treating an emulsion according to any one of claims 1 to 6, characterised in that the emulsion is broken by a quantity of at least one cyclodextrin such that the ratio by weight between cyclodextrin(s) on the one hand and the quantity of fatty substance contained in the emulsion on the other hand is between about 0.010/1 and about 10/1, preferably between 0.015/1 and 5/1 and in particular between 0.015/1 and 3/1.

8. A process for treating an emulsion according to any one of claims 1 to 7, characterised in that the emulsion which is to be broken by at least one cyclodextrin is an oil-in-water (O/W) emulsion and in that said emulsion preferably contains at least one oil-in-water (O/W) emulsifying agent as surface active agent.

9. A process for treating an emulsion according to one of claims 4 or 5, characterised in that the emulsion is broken by a quantity of at least one cyclodextrin such that the ratio by weight between cyclodextrin(s) on the one hand and the quantity of surface active agent(s) contained in the emulsion on the other hand is between about 0.5/1 and about 20/1, in particular between 1/1 and 10/1.

10. A process for treating an emulsion according to any one of claims 1 to 9, characterised in that it also comprises a stage of treating the emulsion with at least one conventional emulsion breaking means, in particular by at least one demulsification reagent, said stage preferably being carried out prior to the stage of breaking the emulsion with at least one cyclodextrin.

11. A process for treating an emulsion according to any one of claims 1 to 10, characterised in that the emulsion consists of a cutting fluid for working metals or of a wool washing or scouring fluid.

12. A process for recovering a fatty substance contained in a material, characterised in that said material has been obtained from an emulsion, in particular an oil-in-water emulsion, previously broken by means of at least one cyclodextrin.

13. A process for recovering a fatty substance according to claim 12, characterised in that the material containing the fatty substance essentially consists of all or part of the fatty phase obtained from the broken emulsion, or of the aqueous phase containing insoluble cyclodextrin/fatty substance complexes obtained from the broken emulsion, or of insoluble complexes contained in said aqueous phase, or of said aqueous phase at least partially freed of the insoluble complexes which it contains, or of any mixture of at least any two of said materials.

14. A process for recovering a fatty substance according to claim 12 or claim 13, characterised in that the material obtained from the broken emulsion contains cyclodextrin/fatty substance complexes and in that said material is subjected to at least one refining treatment selected from the group comprising thermal treatments, polar or apolar solvent treatments and cyclodextrin hydrolysis treatments.

## Patentansprüche

1. Verfahren zur Behandlung einer Emulsion, dadurch gekennzeichnet, daß es eine Stufe des Brechens der genannten Emulsion durch mindestens ein Cyclodextrin umfaßt.

2. Verfahren zur Behandlung einer Emulsion nach Anspruch 1, dadurch gekennzeichnet, daß das Cyclodextrin aus der durch alpha-Cyclodextrin, beta-Cyclodextrin und ihren Derivaten gebildeten Gruppe ausgewählt wird.

3. Verfahren zur Behandlung einer Emulsion nach einem der Ansprüche 1 oder 2, dadurch gekennzeichnet, daß die Emulsion, die durch mindestens ein Cyclodextrin gebrochen wird, mindestens zu etwa 50 % ihres Gewichtes, vorzugsweise mindestens zu 60 % ihres Gewichtes, aus mindestens einem Fett und Wasser besteht.

4. Verfahren zur Behandlung einer Emulsion nach irgendeinem der Ansprüche 1 bis 3, dadurch gekennzeichnet, daß die Emulsion, die durch mindestens ein Cyclodextrin gebrochen wird, mindestens ein oberflächenaktives Mittel von anionischer, kationischer, amphoterer oder nichtionischer Beschaffenheit enthält.

5. Verfahren zur Behandlung einer Emulsion nach Anspruch 4, dadurch gekennzeichnet, daß das oberflächenaktive Mittel von nichtionischer Beschaffenheit ist und einen HLB-Wert aufweist, der zwischen etwa 8,0 und etwa 18,0 liegt.

6. Verfahren zur Behandlung einer Emulsion nach irgendeinem der Ansprüche 1 bis 5, dadurch gekennzeichnet, daß die Emulsion, die durch mindestens ein Cyclodextrin gebrochen wird, eine stabile Emulsion ist, die bereits ein Cyclodextrin, insbesondere beta-Cyclodextrin enthält.

7. Verfahren zur Behandlung einer Emulsion nach irgendeinem der Ansprüche 1 bis 6, dadurch gekennzeichnet, daß die Emulsion durch eine solche Menge von mindestens einem Cyclodextrin gebrochen wird, daß das Gewichtsverhältnis zwischen einerseits Cyclodextrin(en) und andererseits der in der Emulsion enthaltenen Menge an Fetten zwischen etwa 0,010/1 und etwa 10/1, vorzugsweise zwischen 0,015/1 und 5/1 und insbesondere zwischen 0,015/1 und 3/1 liegt.

8. Verfahren zur Behandlung einer Emulsion nach irgendeinem der Ansprüche 1 bis 7, dadurch gekennzeichnet, daß die Emulsion, die durch mindestens ein Cyclodextrin gebrochen wird, eine Öl-in-Wasser-Emulsion ("H/E") ist und daß die genannte Emulsion vorzugsweise als oberflächenaktives Mittel mindestens einen Öl-in-Wasser-Emulgator ("H/E") enthält.

9. Verfahren zur Behandlung einer Emulsion nach einem der Ansprüche 4 oder 5, dadurch gekennzeichnet, daß die Emulsion durch eine solche Menge von mindestens einem Cyclodextrin gebrochen wird, daß das Gewichtsverhältnis zwischen einerseits Cyclodextrin(en) und andererseits der in der Emulsion enthaltenen Menge an oberflächenaktivem(n) Mittel(n) zwischen etwa 0,5/1 und etwa 20/1, insbesondere zwischen 1/1 und 10/1 liegt.

10. Verfahren zur Behandlung einer Emulsion nach irgendeinem der Ansprüche 1 bis 9, dadurch gekennzeichnet, daß es außerdem eine Stufe zur Behandlung der Emulsion durch mindestens ein klassisches Mittel zum Brechen der Emulsion umfaßt, insbesondere durch mindestens ein Reagens zur Demulgierung, wobei die genannte Stufe vorzugsweise vor der Stufe des Brechens der Emulsion durch mindestens ein Cyclodextrin durchgeführt wird.

11. Verfahren zur Behandlung einer Emulsion nach irgendeinem der Ansprüche 1 bis 10, dadurch gekennzeichnet, daß die Emulsion aus einer Schneidflüssigkeit für die Bearbeitung von Metallen oder aus einem Wasser zum Waschen oder Entschweißen von Wolle besteht.

12. Verfahren zur Gewinnung eines in einem Material enthaltenen Fettes, dadurch gekennzeichnet, daß das genannte Material ausgehend von einer zuvor durch mindestens ein Cyclodextrin gebrochenen Emulsion, insbesondere einer Öl-in-Wasser-Emulsion, erhalten wurde.

13. Verfahren zur Gewinnung eines Fettes nach Anspruch 12, dadurch gekennzeichnet, daß das Fett enthaltende Material im wesentlichen vollständig oder teilweise entweder aus der fetten Phase, die ausgehend von der gebrochenen Emulsion erhalten wurde, oder aus der wäßrigen Phase, die unlösliche Komplexe Cyclodextrin/Fette enthält, ihrerseits erhalten ausgehend von der gebrochenen Emulsion, oder aus in der genannten wäßrigen Phase enthaltenen unlöslichen Komplexen, oder aus der genannten wäßrigen Phase, die mindestens teilweise von den unlöslichen Komplexen, die sie enthält, befreit wurde, oder aus irgendeiner Mischung von mindestens zwei beliebigen der genannten Materialien besteht.

14. Verfahren zur Gewinnung eines Fettes nach Anspruch 12 oder Anspruch 13, dadurch gekennzeichnet, daß das ausgehend von der gebrochenen Emulsion erhaltene Material Komplexe Cyclodextrin/Fette enthält und daß das genannte Material mindestens einer Behandlung zur Raffination unterzogen wird, gewählt aus der die thermischen Behandlungen, die Behandlungen durch polare oder apolare Lösungsmittel und die Behandlungen zur Hydrolyse des Cyclodextrins umfassenden Gruppe.
